## Europäisches Patentamt
## European Patent Office
## Office européen des brevets

(11) Veröffentlichungsnummer: **0 033 963**
**B1**

(12) # EUROPÄISCHE PATENTSCHRIFT

(45) Veröffentlichungstag der Patentschrift:
**16.05.84**

(51) Int. Cl.³: **F 16 J 15/32**

(21) Anmeldenummer: **81100876.2**

(22) Anmeldetag: **07.02.81**

(54) **Radialwellendichtring.**

(30) Priorität: **07.02.80 US 119297**

(43) Veröffentlichungstag der Anmeldung:
**19.08.81 Patentblatt 81/33**

(45) Bekanntmachung des Hinweises auf die Patenterteilung:
**16.05.84 Patentblatt 84/20**

(84) Benannte Vertragsstaaten:
**AT BE CH DE FR GB IT LI NL SE**

(56) Entgegenhaltungen:
**DE - A - 1 525 882**
**FR - A - 2 456 888**
**US - A - 3 501 155**

(73) Patentinhaber: **Firma Carl Freudenberg, Höhnerweg 2, D-6940 Weinheim/Bergstrasse (DE)**

(72) Erfinder: **Braconier, Karl, 369 River Road, Bridgewater, NH 03222 (US)**

(74) Vertreter: **Weissenfeld-Richters, Helga, Dr., Höhnerweg 2, D-6940 Weinheim/Bergstrasse (DE)**

BUNDESDRUCKEREI BERLIN

## Radialwellendichtung

Die Erfindung betrifft einen Radialwellendichtring für den Spalt zwischen einer drehbaren Welle und einem diesem umgebenen, feststehenden Gehäuse sowohl unter statischen als auch unter dynamischen Bedingungen, bestehend aus einem Versteifungsring mit winkelförmigem Profil und einem an dessen radial nach innen weisenden Schenkel anvulkanisierten, axial vorspringenden Dichtring aus einem nachgiebigen Werkstoff, der von einer auf seinen Außenumfang aufgelegten Ringwendelfeder mit der Dichtfläche gegen die Welle gedrückt wird, wobei die Dichtfläche aus einer die Welle umschließenden, statisch wirksamen Dichtkante besteht, einer sich auf der dem abgedichteten Raum zugewandten Seite anschließenden Fläche und aus daraus in radialer Richtung nach innen vorspringenden Rückförderrippen, die gleiche Abstände voneinander haben, die einen Winkel mit der Achse der Welle einschließen und die zusammen mit der Welle und der Dichtkante Kammern begrenzen, die axial in Richtung des abgedichteten Raumes offen sind.

Ein solcher Radialwellendichtring ist aus der US-A-35 01 155 bekannt. Er weist beiderseits der Dichtkante Rückförderrippen mit entgegengesetzter Wirkungsrichtung auf, die innenseitig durch eine Kegelfläche begrenzt sind, die auf einer Kegelfläche angeordnet sind und die mit der Achse der abgedichteten Welle einen Winkel von 45° einschließen. Die Herstellung ist relativ aufwendig, was unter wirtschaftlichen Gesichtspunkten nicht vertretbar ist. Die unbefriedigende Wärmeabführung aus dem Bereich der Dichtkante kann zu einer Beeinträchtigung der Gebrauchsdauer führen.

Aus der US-A-39 13 925 ist ein Wellendichtring bekannt, bei dem sich die auf der dem abgedichteten Raum zugewandten Seite an die Dichtkante anschließende Fläche und die Staurippen parallel zur Achse der abgedichteten Welle erstrecken, wobei der Innendurchmesser der Staurippen größer ist als derjenige der Dichtkante. Die von der Fläche, der Dichtkante, den Staurippen und der Welle begrenzte Kammern sind in Richtung des abgedichteten Raumes durch eine Dichtlippe abgeschlossen, die bei Wellenstillstand auf der Welle ruht. Die Kammern sind niederdruckseitig durch eine Ansaugöffnung mit dem abgedichteten Raum verbunden. Bei sich drehender Welle wird durch diese Ansaugöffnungen Flüssigkeit angesaugt und innerhalb der Kammern komprimiert, bis Dichtlippe und Dichtkante von der Welle abheben und einen Spalt freigeben, durch den die enthaltene Flüssigkeit in den abgedichteten Raum entweichen kann. Die freie Durchdringbarkeit der Kammern wird indessen durch die Dichtlippe in erheblichem Maße blockiert, und es kann dadurch zur Einlagerung und Kumulation von Schmutzpartikeln aus den kontinuierlich durchgeführten Medium kommen, was die dynamische und statische Abdichtungswirkung erheblich beeinträchtigt und einen starken Verschleiß zur Folge haben kann. Neben den vorstehend bereits erwähnten Funktionselementen sind zusätzlich auf der der Außenluft zugewandten Seite der Dichtkante Rückförderrippen 32 vorhanden. Das benötigte Formwerkzeug ist dementsprechend aufwendig und steht einer wirtschaftlichen Herstellung entsprechender Radialwellendichtringe störend entgegen.

Ein weiterer Dichtring dieser Art ist durch die CH-A-4 71 992 bekanntgeworden. Die die dynamische Abdichtung bewirkenden Vorsprünge sind auf einer kegligen Fläche angeordnet, und sie dienen ausschließlich der Rückförderung des abgedichteten Mediums von der die statische Abdichtung bewirkenden Dichtkante. Der erzielte Rückfördereffekt steigt mit zunehmender Wellendrehzahl, und im gleichen Maße, in dem abzudichtendes Medium von der die statische Abdichtung bewirkenden Dichtkante ferngehalten wird, sinkt der Anteil der pro Zeiteinheit durch das abgedichtete Medium abgeführten Wärmemenge. Es kann dadurch zu einem großen Wärmestau an der Dichtkante kommen, und bei hohen Wellendrehzahlen zu einer Versprödung bzw. zum Verbrennen des gummielastischen Dichtungswerkstoffes.

Angesichts dieser Mängel des Standes der Technik ist es ein Hauptziel der vorliegenden Erfindung, einen einfach herzustellenden Wellendichtring mit nur wenigen Funktionselementen vorzuschlagen, der den abzudichtenden Spalt bei hoher Wellendrehzahl hydrodynamisch und bei Wellenstillstand statisch verschließt und bei dem unabhängig vom jeweiligen Betriebszustand jederzeit eine ausreichende Kühlung und Schmierung des Dichtringes aus elastomerem Werkstoff gewährleistet ist. Hierdurch soll insbesondere eine wesentlich verlängerte Gebrauchsdauer erreicht werden.

Diese Aufgabe wird erfindungsgemäß bei einem Wellendichtring der eingangs genannten Art mit den kennzeichnenden Merkmalen des Patentanspruchs 1 gelöst. Auf vorteilhafte Ausgestaltungen nehmen die Unteransprüche Bezug.

Der vorgeschlagene Wellendichtring ähnelt in seiner äußeren Gestalt und hinsichtlich seiner praktischen Anwendung einer Ausführung nach der eingangs angesprochenen CH-A-4 71 992. Im Gegensatz zu dieser sind jedoch alle, die eigentliche Abdichtung bewirkenden Funktionselemente in einer Dichtfläche zusammengefaßt, die sich parallel zur Achse der abgedichteten Welle erstreckt. Die die dynamische Abdichtung bewirkenden Vorsprünge haben die Gestalt von Staurippen, die sich von einer die Welle in einem Abstand umgebenen, zylindrischen Fläche des Dichtringes in radialer Richtung nach innen erstrecken und die einen Winkel mit der Rotationsachse der Welle einschließen, wodurch in Richtung des abgedichteten Mediums offene Kammern gebildet werden. Die die Anpressung der Dichtlippe an die Welle bewirkende Ringwendelfeder ist so bemessen, daß die Federkraft von der sich bei hoher Wellendrehzahl aufbauenden, radial nach außen gerichteten hydrodynamischen Kraft ausgeglichen wird. Der Dichtring wird dadurch in radialer Richtung aufgeweitet, und die Dichtkante und die Rückförderrippen nehmen einen Abstand von der Oberfläche der abgedichteten Welle ein. Unter normalen Betriebsbedingungen arbeitet der vorgeschlagene Wellendichtring daher verschleißfrei, die Größe des Abstandes steigt mit zunehmender Wellendrehzahl und bleibt bei Erreichen einer bestimmten Wellendrehzahl konstant. Sie ist unmittelbar abhängig von der Größe der im Dichtspalt wirksamen hydrodynamischen Kräfte und es ist deshalb unabhängig von der jeweiligen Wellendrehzahl eine gute Abdichtung gewährleistet. Bei sich vermindernder Wellendrehzahl vermindert sich die Weite des Spaltes bis es bei Wellenstillstand zur gegenseitigen Berührung und Anpressung der Dichtkante gegen die abgedichtete Welle kommt. Die Abdichtung des Spaltes ist in diesem Betriebszustand rein statischer Natur. Da das abgedichtete Medium unmittelbar vor Wellenstillstand nicht mehr in starkem Maße in den abgedichteten Raum zurückgefördert wird, ist eine Benetzung und Schmierung der Dichtkante in ausreichendem Maße gewährleistet. Diese kann dadurch zylindrisch ausgebildet werden, wodurch sich eine Verbesserung des allgemeinen Verschleißverhaltens ergibt. Die am neuen Wellendichtring vorhandenen maßlichen Relationen zwischen der Dichtkante und zwischen den Staurippen bleiben dadurch erhalten und es ist kein Einschleifen des Wellendichtringes zur Erlangung seiner Betriebsfähigkeit erforderlich.

Andere Ziele, charakteristische Merkmale und Vorteile der vorliegenden Erfindung ergeben sich aus der folgenden, detaillierten Beschreibung einer bevorzugten Ausführungsform derselben zusammen mit den Zeichnungen. Es zeigt

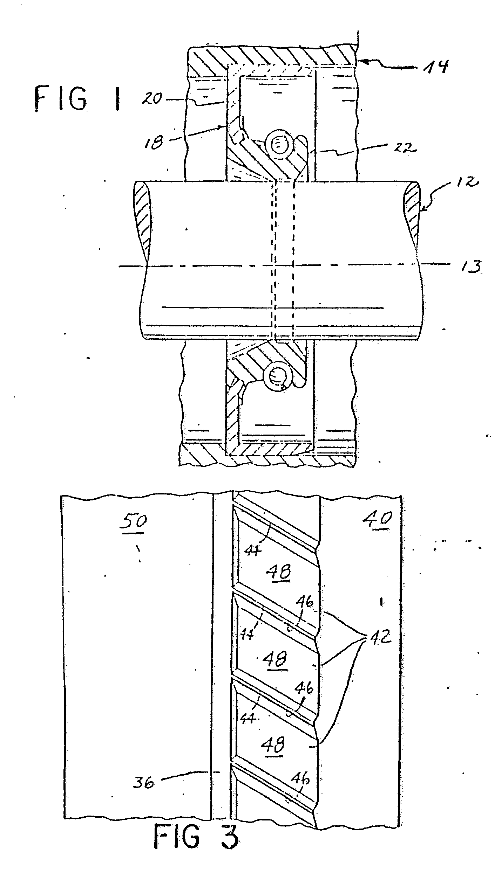

Fig. 1 einen Radialwellendichtring in vertikaler, teilweise geschnittener Darstellung, der auf einer durchgehenden Welle in einem umgebenden Gehäuse montiert ist,

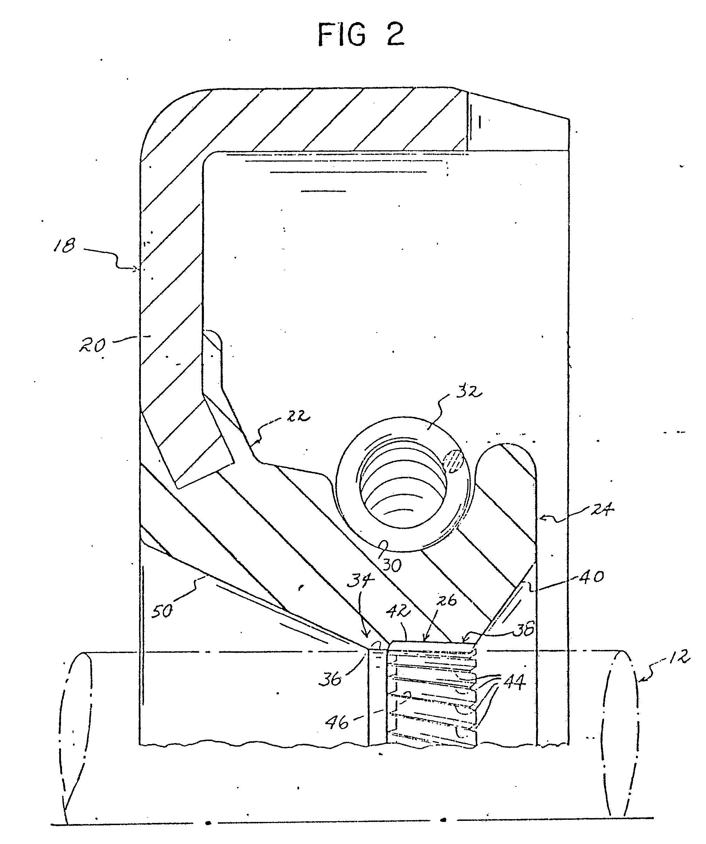

Fig. 2 eine vergrößerte, vertikale Teilansicht im Querschnitt des in Fig. 1 gezeigten Radialwellendichtringes,

Fig. 3 die Dichtfläche des Radialwellendichtringes nach den Fig. 1 und 2 in der Draufsicht, enthaltend die umlaufende, statisch wirkende Dichtkante und die Staurippen.

Allgemein ist folgendes auszuführen:

Der dargestellte Radialwellendichtring dient zur Abdichtung des Spaltes zwischen einem feststehenden Gehäuse 14 und einer Welle 12, die dessen Wandung durchdringt. Die Welle 12 weist zwei Betriebszustände auf, nähmlich den Wellenstillstand und die Drehbewegung.

Der Radialwellendichtring 18 besteht aus einem ringförmigen, starren Versteifungsring 20 mit einem winkelförmigen Profil aus Stahlblech und einem Dichtring 22, der an den radial nach innen weisenden Schenkeln des Versteifungsringes anvulkanisiert ist. Der Dichtring besteht demzufolge aus einem gummielastischen Werkstoff.

Der Dichtring hat eine zentrale Achse 13, die zusammenfällt mit derjenigen der Welle 12 und enthält ein integrales sich radial nach innen erstreckendes, flexibles inneres Teil 24, das in einer ringförmig ausgebildeten Dichtfläche 26 endet. Die Dichtfläche liegt bei ruhender Welle gleitend auf dem Außenumfang der abgedichteten Welle 12 auf. Die Dichtfläche wird in Richtung des abgedichteten Mediums durch die Kegelfläche 40 des Dichtringes 24 begrenzt, in Richtung der Außenluft durch die Kegelfläche 50.

Der Dichtring weist radial außerhalb der Dichtfläche eine ringförmig umlaufende Nut 30 auf, in der die Ringwendelfeder, die eine radial nach innen gerichtete Kraft auf den Dichtring 24 ausübt.

Die Dichtfläche 26 wird auf der der Außenluft zugewandten Seite durch eine zylindrisch ausgebildete, umlaufende Dichtkante 34 begrenzt, auf der dem abgedichteten Medium zugewandten Seite durch den die dynamische Abdichtung bewirkenden Teilbereich 38. Dieser besteht aus einer die Welle auch bei Wellenstillstand in einem Abstand umgebenden, zylindrisch ausgebildeten Fläche 26 des Dichtringes 24 auf der die sich radial nach innen erstreckende Staurippen 44 angeordnet sind.

Die zylindrisch ausgebildete Fläche 26 erstreckt sich somit parallel zur Dichtfläche der Dichtkante 34 auf der dem abgedichteten Medium zugewandten Seite des Dichtringes.

Die auf der zylindrisch ausgebildeten Fläche 26 angeordneten Staurippen 44, die sich radial nach innen erstrecken, schließen mit der Rotationsachse des Dichtringes 22 einen Winkel von 30° ein, was sich in bezug auf die Bedingungen des allgemeinen Maschinenbaus ausgezeichnet bewährt hat. Die inneren Oberflächen 46 der Rippen 44 sind auf einer unterbrochenen, zylindrischen Oberfläche angeordnet, die einen Durchmesser hat, der nicht kleiner ist als derjenige der die statische Abdichtung bewirkenden Dichtkante 34. Die zylindrisch ausgebildete Fläche 42 und die Staurippen 44 bilden Kammern 48, die in Richtung des abgedichteten Mediums offen sind.

Bei Wellenstillstand übt die Ringwendelfeder 32 eine Federkraft aus, die die umlaufende Dichtkante 34 gegen die abgedichtete Welle 12 drückt, um so das Ausströmen des abgedichteten Mediums, beispielsweise einer Flüssigkeit, entlang der Welle 12 zu verhindern. Die Kammern 48 sind jedoch in Richtung des abgedichteten Mediums offen und dieses vermag dadurch die Dichtfläche 36 und die inneren Oberflächen 46 der Rippen 44 in ausreichendem Maße zu schmieren um eine Erwärmung während der Eingangsphase des Wellenanlaufes zu verhindern.

Unter dynamischen Bedingungen, d. h. bei rotierender Welle, bringt die radial nach außen gerichtete, hydrodynamische Kraft, die auf die Dichtfläche 26 von der in den Kammern 48 befindlichen Flüssigkeit ausgeübt wird, die die statische Abdichtung bewirkende Dichtkante 36 zum Abheben von der Welle 12. Die Rippen 44 auf dem dynamischen Teil 38 schaffen eine axial treibende Kraft, die die Flüssigkeit auf der Flüssigkeitsseite des Dichtkörpers 22 daran hindert, durch den nunmehr gebildeten Spalt zwischen der Dichtkante 34 und der Welle 12 hindurchzukriechen, was gleichbedeutend wäre mit einer Leckage.

Aus der sich mit zunehmender Wellendrehzahl vergrößernden Spaltaufweitung ergibt sich ein proportionales Ansteigen der Federkraft der Ringwendelfeder 32. Die radial nach außen gerichtete hydrodynamische Kraft wird dadurch schließlich ausgeglichen und die Dichtkante 34 und die inneren Oberflächen 46 der Rippen 44 verharren in einem bestimmten Abstand von der Oberfläche der abgedichteten Welle 12. Dieser Abstand ist von kontrollierter Größe, und es wird dadurch zuverlässig das Ausströmen des abgedichteten Mediums entlang der Welle unterbunden.

### Patentansprüche

1. Radialwellendichtring für den Spalt zwischen einer drehbaren Welle und einem diese umgebenden, feststehendes Gehäuse sowohl unter statischen als auch unter dynamischen Bedingungen, bestehend aus einem Versteifungsring (20) mit winkelförmigem Profil und einem an dessen radial nach innen weisenden Schenkel anvulkanisierten, axial vorspringenden Dichtring (22) aus einem nachgiebigen Werkstoff, der von einer auf seinen Außenumfang aufgelegten Ringwendelfeder (32) mit der Dichtfläche gegen die Welle gedrückt wird, wobei die Dichtfläche aus einer die Welle umschließenden, statisch wirksamen Dichtkante (34) besteht, einer sich auf der dem abgedichteten Raum zugewandten Seite anschließenden Fläche (26) und aus daraus in radialer Richtung nach innen vorspringenden Rückförderrippen (44), die gleiche Abstände voneinander haben, die einen Winkel mit der Achse der Welle einschließen und die zusammen mit der Welle und der Dichtkante Kammern begrenzen, die axial in Richtung des abgedichteten Raumes offen sind, dadurch gekennzeichnet, daß sich die Fläche (26) und die Rückförderrippen (44) parallel zur Oberfläche der abgedichteten Welle erstrecken, daß die Rückförderrippen einen Winkel von 20 bis 40° mit der Achse der Welle einschließen und daß der Innendurchmesser der Rückförderrippen nicht kleiner ist als derjenige der Dichtkante (36).

2. Radialwellendichtring nach Anspruch 1, dadurch gekennzeichnet, daß die Rückförderrippen (44) und die Rotationsachse der Welle (12) einen Winkel von 30° einschließen.

3. Radialwellendichtring nach Anspruch 1, dadurch gekennzeichnet, daß die Rückförderrippen (44) auf der Innenseite durch eine unterbrochene, gemeinsame Zylinderfläche (46) begrenzt sind.

### Claims

1. A radial shaft-sealing ring for the gap between a rotatable shaft and a stationary housing surrounding the latter, both under static and under dynamic conditions, comprising a stiffening ring (20) of angular profile and an axially projecting sealing ring (22) which is vulcanised to the radially inward-pointing leg of the profile and consists of a yielding material and the sealing face of which is forced against the shaft by an annular helical spring (32) placed on its outer periphery, the sealing face consisting of a statically acting sealing edge (34) surrounding the shaft, a surface (26) adjoining on the side facing the sealed space and return ribs (44) which project inwards therefrom in the radial direction and are at equal mutual distances and which enclose an angle with the axis of the shaft and, together with the shaft and the sealing edge, delimit chambers which are axially open in the direction of the sealed space, characterized in that the surface (26) and the return ribs (44) extend parallel to the surface of the sealed shaft, that the return ribs enclose an angle of 20 to 40° with the axis of the shaft and that the internal diameter of the return ribs is not smaller than that of the sealing edge (36).

2. A radial shaft-sealing ring according to claim 1, characterized in that the return ribs (44) and the axis of rotation of the shaft (12) enclose an angle of 30°.

3. A radial shaft-sealing ring according to claim 1, characterized in that the return ribs (44) are delimited on the inside by an interrupted common cylindrical surface (46).

### Revendications

1. Joint d'étanchéité d'arbre destiné à étancher la fente entre un arbre rotatif et un carter fixe qui l'entoure sous conditions statiques et sous conditions dynamiques, constitué d'un anneau raidisseur (20) à profil en cornière et d'une bague d'étanchéité (22) en élastomère qui est vulcanisée sur l'aile dirigée radialement vers l'intérieur de l'anneau raidisseur, fait saillie axialement et est pressée par sa surface d'étanchéité contre l'arbre au moyen d'un ressort à boudin en anneau (32) disposé sur le pourtour de la bague d'étanchéité, la surface d'étanchéité étant formée d'un bord d'étanchéité (34) à effet statique entourant l'arbre, d'une face (26) qui se raccorde à ce bord du côté de l'espace étanché et de nervures de refoulement (44) uniformément réparties qui font radialement saillie vers l'intérieur de cette face, forment un angle avec l'axe de l'arbre et délimitent, avec l'arbre et le bord d'étanchéité, des chambres qui sont axialement ouvertes vers l'espace étanché, caractérisé en ce que la face (26) et les nervures de refoulement (44) sont parallèles à la surface de l'arbre étanché, que les nervures de refoulement forment un angle de 20 à 40° avec l'axe de l'arbre et que le diamètre intérieur des nervures de refoulement n'est pas plus petit que le diamètre du bord d'étanchéité (36).

2. Joint selon la revendication 1, caractérisé en ce que les nervures de refoulement (44) et l'axe de rotation de l'arbre (12) renferment un angle de 30°.

3. Joint selon la revendication 1, caractérisé en ce que les nervures de refoulement (44) sont délimitées sur le côté radialement intérieur par une surface cylindrique interrompue (46) commune.

FIG 1

FIG 3

# FIG 2